# EUROPÄISCHE PATENTANMELDUNG

(11) **EP 1 138 836 A2**
(43) Veröffentlichungstag der Anmeldung: **04.10.2001**
(21) Anmeldenummer: 01106969.7
(22) Anmeldetag: 21.03.2001
(51) Int. Cl.: E03B 1/04

(54) **Regenwasserwerk**

(30) Priorität: 30.03.2000 DE 10015771
(71) Anmelder: Westfa Vertriebs- und Verwaltungs- GmbH, 58099 Hagen (DE)
(72) Erfinder: Mertel, Bernhard, Dipl.-Ing., 67677 Enkenbach-Alsenborn (DE)
(74) Vertreter: Köchling, Conrad-Joachim

(57) **Zusammenfassung**

Um ein Regenwasserwerk zur Speisung von Wasserverbrauchsstellen (BW) mit einem Regenwasserspeicher (8), aus dem mittels einer Druckerhöhungspumpe (3) Regenwasser der Wasserverbrauchsstelle (BW) zuführbar ist, und mit einem Speicher (2) für Trinkwasser (TW), aus dem mittels der Druckerhöhungspumpe (3) Trinkwasser entnehmbar ist, zu schaffen, welches mit einfachem konstruktivem Aufwand betriebssicher und störungsfrei betrieben werden kann, wird vorgeschlagen, daß in die vom Regenwasserspeicher (8) zur Druckerhöhungspumpe (3) führende Leitung (10) eine Tauchmotorpumpe (6) eingeschaltet ist, die gemeinsam mit der Druckerhöhungspumpe (3) einschaltbar ist und über eine Mindestfüllstand-Erfassungseinrichtung (7) bei Unterschreiten des Füllstandes ausgeschaltet ist, in die vom Regenwasserspeicher (8) zur Druckerhöhungspumpe (3) führende Leitung (10) ein erster Rückflußverhinderer (5) zwischen Druckerhöhungspumpe (3) und Tauchmotorpumpe (6) eingeschaltet ist, der in Versorgungsströmungsrichtung des Regenwasserstroms öffnet und die vom Trinkwasserspeicher(2) kommende Versorgungsleitung (11) an die zur Druckerhöhungspumpe (3) führende Leitung (10) zwischen Druckerhöhungspumpe (3) und erstem Rückflußverhinderer (5) angeschlossen ist und vor der Anschlußstelle ein zweiter Rückflußverhinderer (5) in die Versorgungsleitung (11) eingeschaltet ist, welcher in Versorgungsströmungsrichtung des Trinkwassers öffnet.

## Beschreibung

Die Erfindung betrifft ein Regenwasserwerk zur Speisung von Wasserverbrauchsstellen mit Regenwasser mit einem drucklosen Regenwasserspeicher, der mit einer Mindestfüllstand-Erfassungseinrichtung ausgestattet ist und aus dem mittels einer Druckerhöhungspumpe Regenwasser entnehmbar und der Wasserverbrauchsstelle zuführbar ist, und mit einem drucklosen Speicher für Trinkwasser, aus dem bei leerem Regenwasserspeicher mittels der Druckerhöhungspumpe Trinkwasser entnehmbar und der Wasserverbrauchsstelle zuführbar ist.

Regenwasserwerke bekannter Art arbeiten beispielsweise mit drucklosen Vorbehältern, die über eine Tauchpumpe stets mit Regenwasser aus einer Zisterne gefüllt werden und, sofern kein Regenwasser vorhanden ist, über eine füllstandsgesteuerte Einrichtung mit Trinkwasser gespeist werden. Dabei zieht eine Druckerhöhungspumpe ihr Wasser immer aus diesem Vorlagebehälter. Solche Anlagen sind beispielsweise in der DE 40 19 142 A1 beschrieben. Andere Regenwasserversorgungsanlagen saugen mit einer selbstansaugenden Pumpe direkt aus einer Regenwasserzisterne. Bei Regenwassermangel schaltet ein Zweiwegeventil in der Saugleitung der Pumpe um und versorgt die Saugleitung der Pumpe aus einem drucklosen Behälter, der über ein Schwimmerventil mit Trinkwasser versorgt ist. Solche Anlagen sind beispielsweise in der DE 296 20 931 U1 beschrieben.

Da bei der oben beschriebenen Einrichtung mit selbstansaugenden Pumpen Probleme auftreten können, weil sich Luft in der Saugleitung sammeln kann und sich diese Luft störend auf den Betrieb auswirkt, wurde auch schon vorgeschlagen (vergleiche DE 297 02 488 U1), in die Saugleitung mit einer Tauchmotorpumpe zu drücken, so daß keine Luftprobleme mehr auftreten können. Auch diese Anlagen arbeiten aber mit einem Zweiwegeventil, das bei Regenwassermangel auf einen Trinkwasserbehälter umschaltet.

Als Mangel wird bei solchen Anlagen angesehen, daß motorgetriebene Zweiwegeventile vorgesehen sein müssen, die störanfällig sind, wobei zudem nachteilig ist, daß auf der Saugseite der Druckerhöhungspumpe große Unterdrücke entstehen, die häufig zu Problemen im Pumpenbetrieb führen.

Ausgehend von diesem Stand der Technik liegt der Erfindung die Aufgabe zugrunde, ein Regenwasserwerk gattungsgemäßer Art zu schaffen, welches mit einfachem konstruktivem Aufwand besonders betriebssicher und störungsfrei betrieben werden kann.

Zur Lösung dieser Aufgabe schlägt die Erfindung vor, daß in die vom Regenwasserspeicher zur Druckerhöhungspumpe führende Leitung eine Regenwasserpumpe eingeschaltet ist, die gemeinsam mit der Druckerhöhungspumpe einschaltbar ist und über die Mindestfüllstand-Erfassungseinrichtung bei Unterschreiten des Füllstandes ausgeschaltet ist,
daß in die vom Regenwasserspeicher zur Druckerhöhungspumpe führende Leitung ein erster Rückflußverhinderer vor der Druckerhöhungspumpe und hinter der Regenwasserpumpe eingeschaltet ist, der in Versorgungsströmungsrichtung des Regenwasserstroms öffnet und in entgegengesetzter Richtung schließt,
und daß die vom Trinkwasserspeicher kommende Versorgungsleitung an die zur Druckerhöhungspumpe führende Leitung zwischen der Pumpe und dem ersten Rückflußverhinderer angeschlossen ist und in Strömungsrichtung des Trinkwassers vor der Anschlußstelle ein zweiter Rückflußverhinderer in die Versorgungsleitung eingeschaltet ist, welcher in Versorgungsströmungsrichtung des Trinkwassers öffnet und in Gegenrichtung schließt.

Bevorzugt ist dabei vorgesehen, daß die Rückflußverhinderer als Rückschlagventile ausgebildet sind.

Zudem ist bevorzugt, daß die Druckerhöhungspumpe und die Regenwasserpumpe über einen von einer Verbrauchsstelle beeinflußten Druckschalter betätigt wird.

Durch die erfindungsgemäße Ausbildung wird infolge geschickter hydraulischer Verschaltung ein Betrieb ohne motorgesteuerte Zweiwegeventile ermöglicht. Anstelle eines motorisch betriebenen Umschaltventiles reicht es aus, vor dem Vorlagebehälter mit Trinkwasser ein mechanisch schließendes Rückschlagventil einzusetzen und vor der Druckerhöhungspumpe in die Druckleitung der Tauchmotorpumpe ebenfalls ein mechanisch schließendes Rückschlagventil einzusetzen. Der Funktionsablauf ist dabei wie folgt:
Bei Wasserbedarf (Öffnen eines Verbraucherventils) schaltet der Druckschaltautomat der Druckerhöhungsanlage sowohl die Druckerhöhungspumpe als auch die Tauchmotorpumpe im Regenwasserspeicher ein.

Die Tauchmotorpumpe im Regenwasserspeicher drückt über eine Druckleitung über den ersten Rückflußverhinderer in die Saugseite der Druckerhöhungspumpe. Der Verbindungsweg zwischen dem Nachspeisebehälter, der mit Trinkwasser gefüllt ist, und der Saugseite der Pumpe wird durch das zweite Rückschlagventil geschlossen, da auf dieser Seite der Pumpe ein Überdruck herrscht, solange die Tauchmotorpumpe im Regenwasserspeicher läuft.

Ist kein Wasser mehr im Regenwasserspeicher (beispielsweise während Trockenperioden im Winter oder im Sommer) schaltet die Tauchmotorpumpe über einen Öffnerkontakt über einen integrierten Schwimmschalter nicht mehr ein, auch wenn sie vom Druckschalterautomat geschaltet wird. In diesem Falle erzeugt die Druckerhöhungspumpe saugseitig einen Unterdruck, der den Rückflußverhinderer vor dem Nachspeisespeicher öffnet. Auf diese Weise wird Trinkwasser aus dem Nachspeisebehälter abgezogen und damit die angeschlossenen Verbraucher versorgt. Der Unterdruck ist dabei zu gering, um die Leitung, die in die Zisterne führt, leer zu saugen. Durch ein mechanisches Schwimmerventil im Nachspeisebehälter wird stets Trinkwasser nachgespeist. Ist nach einem Regenfall wieder ausreichend Wasser in dem Regenwasserspeicher, wird dieser bei Inbetriebnahme des Regenwasserwerkes zur Wasserversorgung benutzt. Trotz der Anordnung von zwei Pumpen ist der Stromverbrauch im wesentlichen gleich der Ausbildung, wie sie im Stand der Technik üblich ist, wobei nur eine Pumpe eingesetzt wird, da die beiden Pumpen vorliegender Erfindung in ihrer Leistung so abgestimmt sind, daß sie zusammengenommen, etwa dieselbe Leistung benötigen bzw. erbringen, wie bei bekannten Einrichtungen nur eine Pumpe. Der Stromverbrauch bleibt daher im wesentlichen gleich.

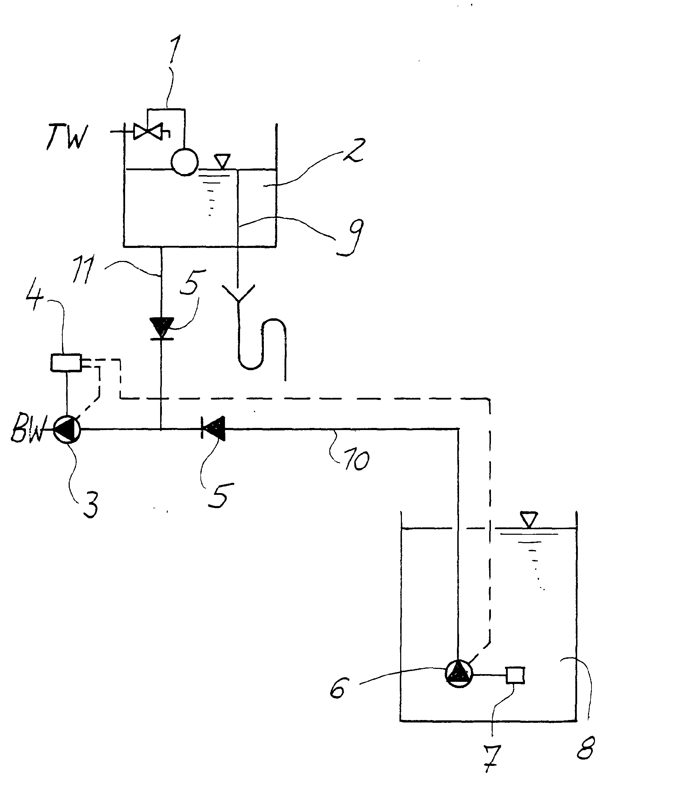

Ein Ausführungsbeispiel der Erfindung ist in der Zeichnung dargestellt und folgenden näher beschrieben.
Die einzige Zeichnungsfigur zeigt die prinzipielle Anordnung eines Regenwasserwerkes zur Speisung von Wasserverbrauchern.

In der Zeichnung ist ein Regenwasserwerk zur Speisung von Wasserverbrauchern (BW) mit Regenwasser gezeigt. Die wesentlichen Bestandteile des Wasserwerkes sind ein druckloser Trinkwasserbehälter 2 mit Trinkwasserspeisung TW, mechanischem Schwimmerventil 1 und Überlauf 9, eine Zisterne 8 (Regenwasserbehälter) mit einer Tauchmotorpumpe 6 als Vorpumpe und einem Schwimmerschalter 7 sowie ein erstes und ein zweites Rückschlagventil 5, eine Druckerhöhungspumpe 3 und ein Druckschaltautomat 4. Die Druckerhöhungspumpe 3 und die Tauchmotorpumpe 6 (Vorpumpe) werden gemeinsam über den Druckschaltautomaten 4, der leitungsmäßig mit den Pumpen elektrisch verbunden ist, geschaltet, der einschaltet, wenn ein Ventil an einer Verbrauchsstelle (BW) geöffnet wird. Sofern in diesem Schaltzustand der Regenwasserbehälter 8 (Zisterne) ausreichend gefüllt ist, läuft die Tauchmotorpumpe 6 an und drückt Regenwasser in die zur ebenfalls eingeschalteten Druckerhöhungspumpe 3 führende Leitung 10 zur Verbrauchsstelle (BW), wobei in der Leitung 10 zwischen der Tauchmotorpumpe 6 und der Druckerhöhungspumpe 3 ein erstes Rückschlagventil 5 angeordnet ist, welches in Strömungsrichtung zur Verbraucherstelle öffnet, in Gegenrichtung aber schließt.

Sofern der Regenwasserspeicher 8 nicht ausreichend gefüllt ist, schaltet der Schwimmschalter 7 die Tauchmotorpumpe 6 ab, so daß selbst dann, wenn der Druckschaltautomat 4 infolge der Öffnung eines Verbraucherventils betätigt wird, die Tauchmotorpumpe 6 nicht in Gang gesetzt wird. Es wird dann lediglich die Druckerhöhungspumpe 3 in Betrieb gesetzt, was dazu führt, daß diese einen Unterdruck erzeugt und somit über eine Leitung 11, in der wiederum ein Rückschlagventil 5 eingeschaltet ist, Trinkwasser aus dem drucklosen Trinkwasservorbehälter 2 abzieht. Die Leitung 11 ist an die Leitung 10 zwischen dem dortigen Rückschlagventil 5 und der Druckerhöhungspumpe 3 angeschlossen. Die Konfiguration ist so ausgelegt, daß der Druck, der über die Tauchmotorpumpe 6 erzeugt wird, ausreichend groß ist, um das Rückschlagventil 5 in der Leitung 11 geschlossen zu halten. Sofern nach Entleerung des Regenwasserbehälters 8 Trinkwasser aus dem Trinkwasserbehälter 2 abgezogen wird, so erzeugt die Druckerhöhungspumpe 3 saugseitig einen Unterdruck, der den Rückflußverhinderer 5 in der Leitung 11 öffnet, wobei dieser Unterdruck aber zu gering ist, um die Leitung 10, die zum Regenwasserbehälter 8 führt, leer zu saugen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Regenwasserwerk zur Speisung von Wasserverbrauchsstellen (BW) mit Regenwasser mit einem drucklosen Regenwasserspeicher (8), der mit einer Mindestfüllstand-Erfassungseinrichtung (7) ausgestattet ist und aus dem mittels einer Druckerhöhungspumpe (3) Regenwasser entnehmbar und der Wasserverbrauchsstelle (BW) zuführbar ist, und mit einem drucklosen Speicher (2) für Trinkwasser (TW), aus dem bei leerem Regenwasserspeicher (8) mittels der Druckerhöhungspumpe (3) Trinkwasser entnehmbar und der Wasserverbrauchsstelle (BW) zuführbar ist, **dadurch gekennzeichnet, daß** in die vom Regenwasserspeicher (8) zur Druckerhöhungspumpe (3) führende Leitung (10) eine Tauchmotorpumpe (6) eingeschaltet ist, die gemeinsam mit der Druckerhöhungspumpe (3) einschaltbar ist und über die Mindestfüllstand-Erfassungseinrichtung (7) bei Unterschreiten des Füllstandes ausgeschaltet ist, **daß** in die vom Regenwasserspeicher (8) zur Druckerhöhungspumpe (3) führende Leitung (10) ein erster Rückflußverhinderer (5) vor der Druckerhöhungspumpe (3) und hinter der Tauchmotorpumpe (6) eingeschaltet ist, der in Versorgungsströmungsrichtung des Regenwasserstroms öffnet und in entgegengesetzter Richtung schließt, und **daß** die vom Trinkwasserspeicher(2) kommende Versorgungsleitung (11) an die zur Druckerhöhungspumpe (3) führende Leitung (10) zwischen der Pumpe (3) und dem ersten Rückflußverhinderer (5) angeschlossen ist und in Strömungsrichtung des Trinkwassers vor der Anschlußstelle ein zweiter Rückflußverhinderer (5) in die Versorgungsleitung (11) eingeschaltet ist, welcher in Versorgungsströmungsrichtung des Trinkwassers öffnet und in Gegenrichtung schließt.

2. Regenwasserwerk nach Anspruch 1,
**dadurch gekennzeichnet, daß** die Rückflußverhinderer (5) als Rückschlagventile ausgebildet sind.

3. Regenwasserwerk nach Anspruch 1 oder 2,
**dadurch gekennzeichnet, daß** die Druckerhöhungspumpe (3) und die Tauchmotorpumpe (6) über einen von einer Verbrauchsstelle (BW) beeinflußten Druckschalter (4) betätigt wird.
